# EUROPÄISCHE PATENTSCHRIFT

(11) **EP 2 914 439 B1**
(45) Veröffentlichungstag und Bekanntmachung des Hinweises auf die Patenterteilung: **18.08.2021**
(21) Anmeldenummer: 13783959.3
(22) Anmeldetag: 31.10.2013
(51) Int. Cl.: B41M 3/14, B41M 5/24, B41M 5/30, B41M 5/26, B41M 5/34

(54) **KARTENKÖRPER MIT VERÄNDERBAREN FOLIENLAGEN UND HERSTELLUNGSVERFAHREN**
CARD BODY WITH VARIABLE FILM LAYERS AND MANUFACTURING PROCESS
CORPS DE CARTE MUNI DE COUCHES DE FILM MODIFIABLES ET PROCÉDÉ DE FABRICATION

(30) Priorität: 01.11.2012 EP 12190955
(43) Veröffentlichungstag der Anmeldung: 09.09.2015
(73) Patentinhaber: Gemalto AG, 5000 Aarau (CH)
(72) Erfinder: SAILER, Christian, CH-5745 Safenwil (CH); BÄCHLI, Christoph, CH-5200 Brugg (CH)
(74) Vertreter: Frischknecht, Harry Ralph
(86) Internationale Anmeldenummer: PCT/EP2013/072811
(87) Internationale Veröffentlichungsnummer: WO 2014/068057

(56) Entgegenhaltungen:
- WO-A1-02/36357
- WO-A1-2011/124920
- US-A1- 2011 033 676
- None

## Beschreibung

### TECHNISCHES GEBIET

Die vorliegende Erfindung betrifft ein Verfahren zur Herstellung eines mehrschichtigen Datenträgers nach dem Oberbegriff von Anspruch 1 und von Anspruch 9 sowie einen nach diesen Verfahren hergestellten Datenträger nach Anspruch 13.

### STAND DER TECHNIK

Aus dem Stand der Technik sind Datenträger, wie beispielsweise Identifikationskarten als Ausweiskarten oder Identifikationsseiten in Personalausweisen, bekannt. Auf solchen Datenträgern werden Informationen, wie beispielsweise personalisierte Informationen zum Ausweisträger, gespeichert.

Damit ein Dokumentkörper beispielsweise für ein bestimmtes Personalisierungsverfahren empfänglich gemacht wird, ist es bekannt, dass die zur Herstellung des Dokumentkörpers verwendeten Rohfolien entsprechend modifiziert werden müssen.

Beispielsweise ist aus dem Stand der Technik bekannt, die transparenten Kartenfolien für Dokumentkörper, die für die Personalisierung durch Laserschwärzung vorgesehen sind, mit IR-Strahlung absorbierenden Additiven, die eine gezielte und kontrollierte Karbonisierung der Kartenfolien gewährleisten, auszurüsten.

Auch sind Dokumentkörper, die für die Personalisierung über Thermodruckverfahren vorgesehen sind, bekannt. Eignet sich das Grundmaterial aufgrund seiner chemischen Zusammensetzung nicht für ein bestimmtes Thermodruckpersonalisierungsverfahren, ist es Stand der Technik, die Folien, die als oberste Lage im Dokumentkörper verwendet werden, vollflächig mit einer rezeptiven Schicht zu versehen. Die Applikation dieser Schicht erfolgt in der Regel als abschliessender Produktionsschritt in der Folienproduktion beim Lieferanten der Folie.

Die vollflächige Applikation von entsprechenden Schichten hat den Vorteil, dass ein Datenträger sehr einfach hergestellt werden kann. Allerdings beeinflussen die Schichten das Personalisierungsverfahren, was beispielsweise zu mangelnder Farbqualität der personalisierten Bereiche führt. Zudem werden gar gewisse Personalisierungsverfahren aufgrund von gewissen Schichteigenschaften verhindert.

US 2011/033676 offenbart einen personalisierbaren Support mit fälschungssicheren Elementen. WO 2011/124920 offenbart ein Sicherheitselement auf einem Sicherheitsartikel. WO 02/36357 zeigt einen mehrschichtigen Körper mit einer lasersensitiven Schicht.

### DARSTELLUNG DER ERFINDUNG

Ausgehend von diesem Stand der Technik liegt der vorliegenden Erfindung die Aufgabe zugrunde, ein Herstellverfahren für einen Datenträger anzugeben, welcher die Nachteile des Standes der Technik überwindet. Insbesondere soll mit dem Verfahren ein Datenträger herstellbar sein, welcher in allen Bereichen eine qualitativ hochstehende Personalisierung, insbesondere eine hochstehendes Druckbild, aufweist.

Diese Aufgabe löst das Verfahren zur Herstellung eines mehrschichtigen Datenträgers nach Anspruch 1 und 9. Ein solcher mehrschichtiger Datenträger umfasst im Wesentlichen mindestens eine Basisschicht mit einer Oberseite und mindestens eine auf der besagten Oberseite angeordnete transparente oder transluzente Informationsschicht mit personalisierten Informationen, wobei sich die Informationsschicht vorzugsweise vollständig über die Basisschicht erstreckt. Die Informationsschicht weist mindestens einen modifizierten Teilbereich und mindestens einen unmodifizierten Teilbereich auf, wobei die Informationsschicht im unmodifizierten Teilbereich bezüglich ihrer Bearbeitungseigenschaften unterschiedlich zum modifizierten Teilbereich ist. In einem Schritt der Personalisierung mit mindestens einem Bearbeitungsmittel wird die Informationsschicht mit personalisierten Informationen versehen, wobei der modifizierte Teilbereich der Informationsschicht unterschiedlich auf die Bearbeitung durch das mindestens eine Bearbeitungsmittel reagiert als der unmodifizierte Teilbereich, wodurch die Information im modifizierten Teilbereich unterschiedlich von der Information im unmodifizierten Teilbereich repräsentiert wird.

Beim Einsatz von einem ersten Bearbeitungsmittel, welches für die Materialeigenschaften des unmodifizierten Teilbereichs vorgesehen ist, und beim Einsatz von einem zweiten Bearbeitungsmittel, welches vom ersten Bearbeitungsmittel unterschiedlich ausgebildet ist und welches für die Materialeigenschaften des modifizierten Teilbereichs vorgesehen ist, kann der Datenträger derart personalisiert werden, dass die Eingangs erläuterten negativen Effekte nicht auftreten. Folglich wird also jeder der Teilbereiche mit dem dafür vorgesehenen Bearbeitungsmittel personalisiert, wodurch die Personalisierung ein qualitativ hochstehendes Erscheinungsbild aufweist. Zudem beeinflusst der Schichtaufbau im modifizierten Teilbereich nicht denjenigen im unmodifizierten Teilbereich und umgekehrt, was ebenfalls dem Erscheinungsbild des Datenträgers zuträglich ist.

Es können aber auch die unterschiedlichen Teilbereiche mit dem gleichen Bearbeitungsmittel unterschiedlich personalisiert werden, wodurch die Information dann in den unterschiedlichen Teilbereichen verschieden dargestellt wird. Das hat den Vorteil, dass mit dem gleichen Bearbeitungsmittel eine unterschiedliche Personalisierung bereitstellbar ist.

Gegenüber vollflächig modifizierten Kartenkörpern, bei welchen die gesamte Fläche modifiziert wird, ermöglicht die Modifikation von Teilbereichen grössere Flexibilität bei der Personalisierung. Insbesondere im Hinblick auf bestimmte Personalisierungsverfahren kann die vollflächige Modifikation auf andere dokumentrelevante Eigenschaften nachteilig auswirken.

Nach Anspruch 1 ist das Bearbeitungsmittel ein Laser mit einer definierten Wellenlänge, wobei der modifizierte Teilbereich bezüglich Licht der besagten Wellenlänge absorbierend ist, und wobei der unmodifizierte Teilbereich bezüglich Licht der besagten Wellenlänge durchlässig ist. Das Licht des Lasers kann also die Informationsschicht im modifizierten Teilbereich nicht durchdringen und im unmodifizierten Teilbereich durchdringen.

Vorzugsweise wird beim Schritt der Personalisierung durch den besagten Laser, welcher auch als ersten Laser bezeichnet werden kann, im modifizierten Teilbereich aufgrund dessen absorbierender Eigenschaft die personalisierte Information auf der Oberseite der Informationsschicht durch einen Materialabtrag eingraviert. Die Information wird also haptisch wahrnehmbar. Im unmodifizierten Bereich verändert der erste Laser beim Schritt der Personalisierung im Bereich der Oberseite der Basisschicht die Informationsschicht aufgrund einer Energieabsorption an der Oberseite der opaken Basisschicht farblich, wobei mit der farblichen Veränderung die personalisierte Information dargestellt wird. Bei der farblichen Veränderung handelt es sich insbesondere um eine Schwärzung.

Mit einem einzigen Bearbeitungsmittel kann die Information eine unterschiedlich wahrnehmbare Ausbildung haben. Dies erlaubt eine besonders effiziente Herstellung eines Datenträgers.

In einer Weiterbildung der Erfindung ist der besagte Laser ein erster Laser mit einer ersten Wellenlänge. Das Bearbeitungsmittel umfasst zusätzlich zum ersten Laser mindestens einen zweiten Laser mit einer zweiten Wellenlänge, wobei der modifizierte Teilbereich bezüglich Licht der ersten Wellenlänge absorbierend ist, und dass der unmodifizierte Teilbereich bezüglich Licht der ersten Wellenlänge und/oder der zweiten Wellenlänge durchlässig ist. Nach dieser Weiterbildung wird der Datenträger also mit einem ersten Laser und einem zweiten Laser mit unterschiedlicher Wellenlänge personalisiert. Weitere Laser mit weiteren unterschiedlichen Wellenlängen können ebenfalls eingesetzt werden.

In einer Weiterbildung der Erfindung umfasst die Informationsschicht ein laseraktivierbares Additiv, welches beim Schritt der Personalisierung durch den zweiten Laser farblich veränderbar ist, wobei das Additiv vorzugsweise im modifizierten Teilbereich und im unmodifizierten Teilbereich vorhanden ist.

Bei gleichzeitiger Personalisierung mit dem ersten Laser und mit dem zweiten Laser im modifizierten Bereich wie auch im unmodifizierten Bereich können mehrere verschiedene Informationsdarstellungsarten bereitgestellt werden. Im modifizierten Bereich wird durch den ersten Laser die Gravur auf der Oberseite bereitgestellt und durch den zweiten Laser wird die Informationsschicht in ihrem Inneren farblich verändert. Im unmodifizierten Bereich wird durch den ersten Laser die Informationsschicht aufgrund der Energieabsorption im Bereich der Basisschicht farblich verändert und durch den zweiten Laser wird die Informationsschicht in ihrem Inneren farblich verändert.

Bei Betrachtung unter Licht im sichtbaren Spektralbereich können alle Informationen erkannt werden. Bei Betrachtung unter Licht mit einer Wellenlänge, welche durch den modifizierten Teilbereich absorbiert wird, können die unterhalb des modifizierten Teilbereichs in der Informationsschicht vorhandenen Informationen nicht erkannt werden, was ein weiteres Sicherheitsmerkmal ist.

Besonders bevorzugt ist die erste Wellenlänge eine Wellenlänge im ultravioletten Bereich und liegt insbesondere bei 254 nm oder 355 nm. Die zweite Wellenlänge liegt besonders bevorzugt im infraroten Bereich, insbesondere bei 1064 nm oder 10,6 µm.

Der modifizierte Teilbereich wird bevorzugt in einem Schritt der Modifikation bereitgestellt,
welcher Schritt ein Auflegen mindestens eines Licht der ersten Wellenlänge absorbierenden Folienteils auf die Informationsschicht umfasst, welcher Folienteil dann in einem Schritt des Verbindens mit der Basisschicht und der Informationsschicht verbunden, insbesondere verschmolzen oder verklebt, wird, oder
welcher Schritt ein Einlegen eines Licht der ersten Wellenlänge absorbierenden Folienteils in eine Kavität in der Informationsschicht umfasst, welcher Folienteil dann in einem Schritt des Verbindens mit der Basisschicht und der Informationsschicht verbunden, insbesondere verschmolzen oder verklebt, wird, oder
welcher Schritt eine Applikation eines Licht der ersten Wellenlänge absorbierendes Materials im gelösten Zustand über ein Druckverfahren oder dergleichen umfasst, oder
welcher Schritt eine Applikation einer Licht der ersten Wellenlänge absorbierenden Farbe umfasst.

Vorzugsweise umfasst die Informationsschicht im Querschnitt gesehen im modifizierten Teilbereich eine modifizierte Schicht, die in oder auf der Informationsschicht beabstandet zur Basisschicht liegt, so dass zwischen der modifizierten Schicht und der Basisschicht sich eine weitere Schicht erstreckt. Die modifizierte Schicht ist eine Absorptionsschicht, welche für Licht des ersten Bearbeitungsmittels absorbierend ist und welche für Licht des zweiten Bearbeitungsmittels durchlässig ist, so dass mit dem zweiten Bearbeitungsmittel die zwischen der modifizierten Schicht und der Basisschicht liegende weitere Schicht personalisiert werden kann. Die modifizierte Schicht und die weitere Schicht sind dabei Teil der Informationsschicht, wobei die weitere Schicht besonders bevorzugt aus dem gleichen Material wie die Informationsschicht im besagten unmodifizierten Teilbereich ist.

In einer alternativen Ausführungsform umfasst die Informationsschicht im modifizierten Teilbereich eine modifizierte Schicht, welche auf der Basisschicht aufliegt und sich von der Basisschicht vollständig durch die Informationsschicht hindurch erstreckt. Diese Ausführungsform eignet sich besonders gut für die Bearbeitung mit dem ersten Laser.

In einer Weiterbildung der Erfindung wird in der Informationsschicht, vorzugsweise unterhalb des modifizierten Teilbereichs, mindestens ein Licht der ersten Wellenlänge fluoreszierender Bereich angeordnet. Im Schritt der Bearbeitung des modifizierten Teilbereiches wird dieser bereichsweise mit dem Bearbeitungsmittel derart abgetragen, dass im besagten Folienbereich unter Beleuchtung mit Licht der ersten Wellenlänge die abgetragenen Bereiche sichtbar werden.

Nach Anspruch 9 ist das Bearbeitungsmittel ein Drucker, insbesondere ein Transfer-, Retransfer-, Thermosublimations-, Inkjetdrucker oder dergleichen, wobei das Farbsubstrat in den modifizierten Teilbereich eindringt, an dessen Oberfläche absorbiert wird oder mit dessen Oberfläche in adhäsiver Wechselwirkung tritt, und dass das Farbsubstrat mit dem unmodifizierten Teilbereich nicht in Wechselwirkung tritt.

Ein nach dem erfindungsgemässen Verfahren hergestellter Datenträger umfasst mindestens eine Basisschicht mit einer Oberseite und mindestens eine auf der besagten Oberseite angeordnete transparente oder transluzente Informationsschicht mit personalisierten Informationen, wobei sich die Informationsschicht vorzugsweise vollständig über die Basisschicht erstreckt. Die Informationsschicht weist mindestens einen modifizierten Teilbereich und mindestens einen unmodifizierten Teilbereich auf, wobei die Informationsschicht im unmodifizierten Teilbereich bezüglich ihrer Bearbeitungseigenschaften unterschiedlich zum modifizierten Teilbereich ist, und wobei dass in einem Schritt der Personalisierung mit mindestens einem Bearbeitungsmittel die Informationsschicht mit personalisierten Informationen versehbar ist. Der modifizierte Teilbereich der Informationsschicht reagiert unterschiedlich auf die Bearbeitung durch das Bearbeitungsmittel als der unmodifizierte Teilbereich, wodurch die Information im modifizierten Teilbereich unterschiedlich von der Information im unmodifizierten Teilbereich repräsentiert wird.

Die Informationsschicht kann eine einzige Schicht sein oder aus mehreren Schichten zusammengestellt werden.

Vorzugsweise ist der Datenträger eine Ausweiskarte, eine Seite eines Passes, eine Kreditkarte, ein Wertpapier, ein Sicherheitsdokument oder dergleichen ist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Ansicht eines Datenträgers;
- Fig. 2: eine schematische Schnittansicht durch den Datenträger nach Figur 1 bei der Bearbeitung mit einem Bearbeitungsmittel;
- Fig. 3: eine schematische Schnittansicht durch den Datenträger nach Figur 1 bei der Bearbeitung mit zwei unterschiedlichen Bearbeitungsmitteln;
- Fig. 4: ein Schichtaufbau einer ersten Ausführungsform des Datenträgers nach der Figur 1 im nicht verbundenen Zustand; und
- Fig. 5: ein Schichtaufbau einer zweiten Ausführungsform des Datenträgers nach der Figur 1 im nicht verbundenen Zustand.

### BESCHREIBUNG BEVORZUGTER AUSFÜHRUNGSFORMEN

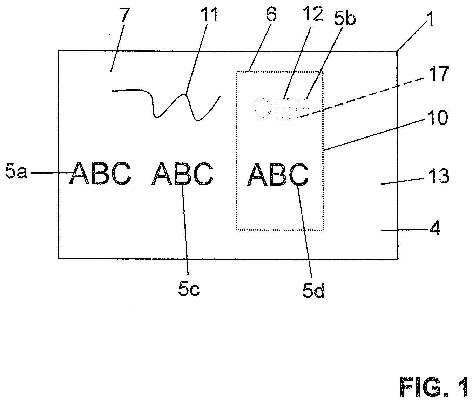

Die Figur 1 zeigt eine schematische Draufsicht auf einen Datenträger 1. Von dieser Draufsicht kann erkannt werden, dass der mit dem erfindungsgemässen Verfahren hergestellte Datenträger 1 unterschiedliche Teilbereiche aufweist. Hier weist der Datenträger 1 einen modifizierten Teilbereich 6 in der Form eines Rechteckes und einen unmodifizierten Teilbereich 7 auf. Der unmodifizierte Teilbereich 7 umschliesst dabei den modifizierten Teilbereich 6. Die Anordnung und geometrische Ausbildung der Teilbereiche 6, 7 kann beliebig sein. Sowohl im modifizierten Bereich wie auch im unmodifizierten Bereich 7 sind personalisierte Informationen 5a, 5b, 5c und 5d auf dem Datenträger 1 gespeichert, insbesondere in den Datenträger 1 eingebracht und/oder aufgebracht. Die personalisierten Informationen 5a, 5b, 5c und 5d sind hier mit den Buchstaben "ABC und "DEF" gekennzeichnet. Die personalisierten Informationen 5a, 5b, 5c und 5d können beispielsweise den Namen einer Person, Nationalität, Geburtsdatum, die Nummer des Datenträgers oder aber eine Abbildung, wie ein Portrait einer Person, sein. Andere Informationen sind ebenfalls denkbar.

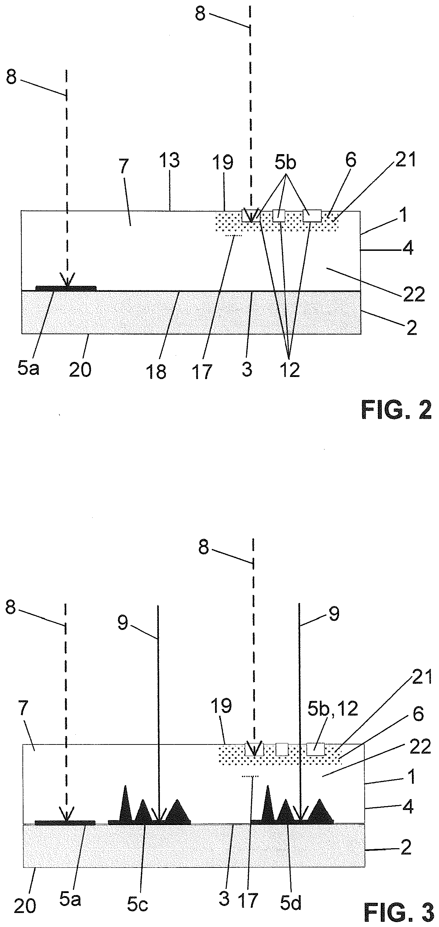

In der Figur 2 wird eine schematische Schnittansicht durch den Datenträger nach Figur 1 gezeigt. In der Figur 2 wird die Informationen 5b im modifizierten Teilbereich 6 und die Information 5a im unmodifizierten Teilbereich 7 gezeigt. In der Figur 3 wird ebenfalls eine Schnittdarstellung durch den Datenträger nach der Figur 1 gezeigt, wobei hier noch zusätzlich die personalisierte Information 5d im modifizierten Teilbereich 6 und die personalisierte Information 5c im unmodifizierten Teilbereich 7 gezeigt wird.

Von den Schnittdarstellungen in den Figuren 2 und 3 kann gut erkannt werden, dass der modifizierte Teilbereich 6 und der unmodifizierte Teilbereich 7 einen integralen Bestandteil der Informationsschicht 4 bilden. Bezüglich des Schichtaufbaus umfasst der unmodifizierte Teilbereich 7 im Wesentlichen die Informationsschicht 4. Der modifizierte Teilbereich umfasst mindestens zwei verschiedene Schichten, nämlich eine modifizierte Schicht 21 und eine unterhalb der modifizierten Schicht 21 liegende weitere Schicht 22. Durch die modifizierte Schicht 21 wird der modifizierte Teilbereich 6 bereitgestellt. Die weitere Schicht 22 wird durch die Informationsschicht 4 bereitgestellt und weist das gleiche Material auf, wie die Informationsschicht 4. Die Materialien der beiden Schichten 21, 22 sind dabei vorzugsweise unterschiedlich zueinander.

Die Informationsschicht 4 kann aus einer Schicht oder mehreren einzelnen Schichten bestehen, welche miteinander in Verbindung stehen.

Es kann also mit der vorliegenden Erfindung ein Datenträger bereitgestellt werden, in welchem lokal begrenzte Bereiche, also der modifizierte Teilbereich 6, veränderte Materialeigenschaften im Vergleich zum verwendeten Basismaterial der Informationsschicht 4 aufweist. Vorzugsweise sind die Materialien aber artgleich oder kompatibel zueinander. Vorzugweise werden Kunststoffe, insbesondere Polycarbonat, PVC, amporphe Polyester und/oder Copolyester (A-PET, PET-G) und/oder teilkristalline Polyester (PET, boPET) oder Gemische davon, für den Datenträger 1 eingesetzt.

Anhand der Figuren 2 und 3 wird ein beispielhafter Aufbau des Datenträgers 1 beschrieben. Der Datenträger 1 umfasst mindestens eine Basisschicht 2 mit einer Oberseite 3. Weiter ist auf der Oberseite 3 mindestens eine Informationsschicht 4 angeordnet. Die Informationsschicht 4 ist für das menschliche Auge im sichtbaren Spektralbereich transparent oder transluzent ausgebildet und erstreckt sich vollständig über die Basisschicht 2. Die Informationsschicht 4 liegt mit einer Unterseite 18 auf der Oberseite 3 der Basisschicht 2 auf und mit einer gegenüberliegend zur Unterseite 18 angeordneten Oberseite 13 frei. Wie erwähnt kann die Informationsschicht 4 kann aus einer oder mehreren Schichten bestehen, wobei dann mehrere Informationsschichten 4 vorhanden sind .Von der Oberseite 13 her können die personalisierten Informationen 5a, 5b, 5c und 5d erkannt werden.

Die Informationsschicht 4 weist den mindestens einen modifizierten Teilbereich 6 und den mindestens einen unmodifizierten Teilbereich 7 auf. Der modifizierte Teilbereich 6 ist dabei unterschiedlich vom modifizierten Teilbereich 7. Die Informationsschicht 4 ist also im unmodifizierten Teilbereich 7 bezüglich ihrer Bearbeitungseigenschaften unterschiedlich zum modifizierten Teilbereich 6. Der modifizierte Teilbereich 6 umfasst hier die zwei Schichten 21 und 22.

Die Basisschicht 2 ist vorzugsweise als opake Schicht ausgebildet. In einigen Ausführungsformen ist es auch denkbar, dass die Basisschicht 2 auch transparent oder transluzent ausgebildet ist.

Das Verfahren zur Herstellung des mehrschichtigen Datenträgers 1 umfasst einen Schritt der Personalisierung mit mindestens einem Bearbeitungsmittel 8, 9. Die Wirkung der Bearbeitungsmittel sind mit Pfeilen 8, 9 in den Figuren 2 und 3 dargestellt. Die Informationsschicht 4 wird in diesem Schritt mit den personalisierten Informationen 5a, 5b und/oder 5c versehen. Jeder zu produzierende Datenträger 1 weist dabei unterschiedliche Informationen auf. Der modifizierte Teilbereich 6 der Informationsschicht 4 reagiert dabei unterschiedlich auf die Bearbeitung durch das mindestens eine Bearbeitungsmittel 8, 9 als der unmodifizierte Teilbereich 7. Hierdurch wird die Information 5a, 5b im modifizierten Teilbereich 6 unterschiedlich von der Information 5a, 5c im unmodifizierten Teilbereich repräsentiert.

Das Bearbeitungsmittel 8, 9 ist vorzugsweise ein Laser, welcher in der und/oder auf der Informationsschicht eine Materialumwandlung bewirkt, so dass die Information 5a, 5b, 5c, insbesondere für das menschliche Auge unter Betrachtung im sichtbaren Spektralbereich sichtbar wird. Unter einer Materialumwandlung wird beispielsweise eine gezielte Karbonisierung von Teilen der Informationsschicht 4 oder ein kontrollierter Materialabtrag der Informationsschicht 4 verstanden.

Besonders bevorzugt ist das Bearbeitungsmittel 8 ein erster Laser mit einer ersten Wellenlänge λ₁ und das Bearbeitungsmittel 9 ein zweiter Laser mit einer zweiten Wellenlänge λ₂. Die beiden Wellenlängen λ₁ und λ₂ sind dabei unterschiedlich voneinander. Beim ersten Laser 8 handelt es sich vorzugsweise um einen Ultraviolett-Laser und beim zweiten Laser 9 handelt es sich vorzugsweise um einen Infrarot-Laser. Die erste Wellenlänge λ₁ liegt vorzugsweise bei 254 nm oder 355 nm und die zweite Wellenlänge λ₂ bei 1064 nm oder 10,6 µm.

In der Figur 2 wird nun die Bearbeitung des Datenträgers 1 mit dem ersten Laser 8 gezeigt, welcher der Bereitstellung der Information 5a und 5b dient. Der modifizierte Teilbereich 6 ist dabei derart ausgebildet, dass dieser bezüglich des Lichtes der ersten Wellenlänge λ₁ absorbierend ist. Die modifizierte Schicht 21 kann hier auch als Absorptionsschicht 21 bezeichnet werden. Im Falle des Ultraviolett-Lasers ist der modifizierte Teilbereich 6 also ein Licht im ultravioletten Bereich absorbierender Bereich. Der unmodifizierte Teilbereich 7 ist bezüglich Licht der ersten Wellenlänge λ₁ und/oder der zweiten Wellenlänge λ₂ durchlässig. Das Licht des Bearbeitungsmittels 8 kann also im unmodifizierten Teilbereich 7 bis zur Oberseite 3 der Basisschicht 2 durch die Informationsschicht 4 gelangen. Bei einer Bearbeitung mit dem ersten Bearbeitungsmittel, hier mit dem UV-Laser 8, kommt es im unmodifizieren Bereich 7 im Bereich der Oberseite 3 der opaken Basisschicht 2 zu einer Energieabsorption, wodurch sich die Informationsschicht 4 im Bereich der Oberseite 13 der opaken Basisschicht 2 bzw. der Unterseite 18 der Informationsschicht 4 farblich verändert. Es kommt insbesondere zu einer Schwärzung. Hierdurch wird die personalisierte Information 5a hergestellt und sichtbar gemacht. Im modifizierten Teilbereich 6, welcher bezüglich des Lichtes des ersten Bearbeitungsmittels 8 absorbierend ausgebildet ist, kommt es zur Energieabsorption im Bereich der Oberseite 13. Hierdurch wird die personalisierte Information 5b auf der Oberseite 13 der Informationsschicht 4 eingraviert. Die Information 5b erstreckt sich also von der Oberseite 13 in die Informationsschicht 4, hier in die Absorptionsschicht 21, hinein, wodurch die Information 5b als taktil wahrnehmbare Information gespeichert ist.

Bezüglich der Figur 2 kann also gesagt werden, dass der modifizierte Teilbereich 6 der Informationsschicht 4 unterschiedlich auf die Bearbeitung durch den UV-Laser 8 als der unmodifizierte Teilbereich 7, wodurch die Information 5b im modifizierten Teilbereich 6 unterschiedlich von der Information 5a im unmodifizierten Teilbereich 7 repräsentiert wird.

Beim Schritt der Personalisierung durch den ersten Laser 8 wird im modifizierten Teilbereich 6 aufgrund dessen absorbierender Eigenschaft die personalisierte Information 5b auf der Oberseite 13 durch einen Materialabtrag eingraviert. Im unmodifzierten Teilbereich 6 wird die personalisierte Information 5a durch eine Farbänderung im Bereich der Oberseite 3 der Basisschicht 2 dargestellt. Das Erscheinungsbild der als Gravur bereitgestellten Information 5b ist also unterschiedlich vom Erscheinungsbild der als Schwärzung bereitgestellten Information 5a. Der Datenträger 1 nach der in Figur 1 gezeigten Ausführungsform weist als zwei verschiedene Darstellungen der Information auf.

In der Figur 3 wird nun die Bearbeitung mit mehr als einem Bearbeitungsmittel, hier mit zwei verschiedenen Bearbeitungsmitteln 8, 9, erläutert. Der Datenträger 1 gemäss der Figur 3 ist im Wesentlichen identisch zum Datenträger 1 nach der Figur 2. Das erste Bearbeitungsmittel 8 ist dabei identisch zum Bearbeitungsmittel, welches bereits anhand der Figur 2 erläutert wurde. Es handelt sich also um einen UV-Laser, mit welchem die Informationen 5b und 5a einbringbar sind. Das zweite Bearbeitungsmittel 9 ist unterschiedlich zum ersten Bearbeitungsmittel 8, wie dies oben ebenfalls bereits erläutert wurde. Das zweite Bearbeitungsmittel 9 ist vorzugsweise ein Laser, der Licht im infraroten Spektralbereich bereitstellt. Mit anderen Worten ausgedrückt liegt die Wellenlänge des Lichtes des zweiten Lasers 9 in einem Bereich, welcher nicht durch den modifizierten Teilbereich 6 absorbiert wird. Der modifizierte Teilbereich 6 ist also für das Licht des zweiten Lasers durchlässig, also vorzugsweise transparent, wodurch der modifizierte Teilbereich 6 der Informationsschicht 4 ebenfalls personalisiert werden kann. Bezüglich des Schichtaufbaus gesehen, liegt die Information in der Schicht 22 unterhalb der Absorptionsschicht 21 und über der Oberfläche 3 der Basisschicht 2.

Vorzugsweise ist die Informationsschicht 4 dabei mit einem laseraktivierbaren Additiv versehen, das eine Farbänderung unter Einwirkung von Laserlichtes im Infrarotbereich ermöglicht. Die Farbänderung kann dabei verschiedenartig sein, besonders bevorzugt ist die Farbänderung derart, dass sie sich dabei von der Basisschicht 2 gesehen in der Informationsschicht 4 nach oben hin von der Unterseite 18 gegen die Oberseite 13 ausdehnt. Aber auch eine Farbänderung, die sich nicht in die besagte Richtung ausdehnt, ist möglich. Der modifizierte Teilbereich 6 ist bezüglich der Wellenlänge des Lichtes des zweiten Bearbeitungsmittels 9 transparent ausgebildet. Folglich wird der IR-Laser den modifzierten Teilbereich 6 passieren können und die Information 5a in der Informationsschicht 4 wie im unmodifizierten Teilbereich 7 einbringen können.

Bei einer Betrachtung unter Licht in einem Spektralbereich ausserhalb des Spektralbereiches, welcher durch den modifizierten Teilbereich 6 absorbiert wird, wird die Information 5c im modifizierten Teilbereich 6 und die Information 5d im unmodifzierten Teilbereich 7 also gleich dargestellt. Solches Licht ist beispielsweise normales Tageslicht. Bei einer Betrachtung unter Licht in einem Spektralbereich innerhalb des Spektralbereiches, welcher durch den modifizierten Teilbereich 6 absorbiert wird, kann die Information im modifizierten Teilbereich 6 nicht erkannt werden, weil im modifizierten Teilbereich 6 das Licht absorbiert wird. Hierdurch kann also die Information 5a und 5c dann unterschiedlich dargestellt werden.

Die Informationsschicht 4 umfasst also ein laseraktivierbares Additiv, welches beim Schritt der Personalisierung durch den zweiten Laser 9 eine Farbveränderung der Schicht hervorruft, w, wobei das Additiv vorzugsweise im modifizierten Teilbereich 6 und im unmodifizierten Teilbereich 7 vorhanden ist. Solche Additive sind aus dem Stand der Technik bekannt.

Der modifizierte Teilbereich 6 wird bei der Herstellung des Datenträgers in einem Schritt der Modifikation bereitgestellt. Der Schritt der Modifikation kann unterschiedlich ausgeführt werden.

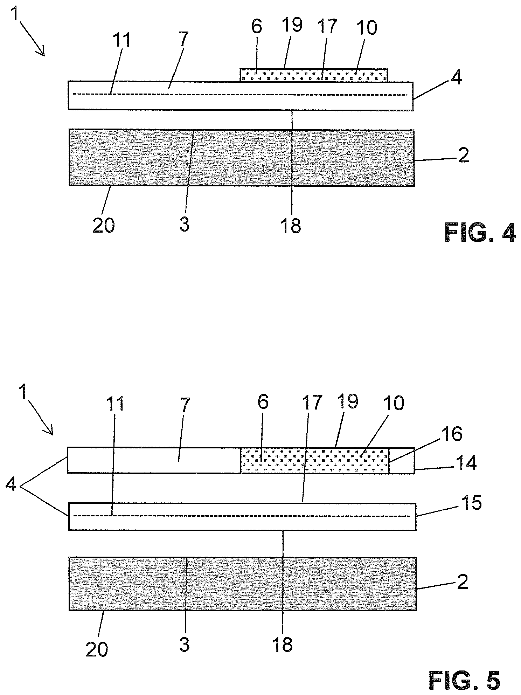

Nach einer ersten Ausführungsform, welche in der Figur 4 gezeigt wird, umfasst der Schritt der Modifikation ein Auflegen mindestens eines Licht der ersten Wellenlänge λ₁ absorbierenden Folienteils 10 auf die Oberseite 13 der Informationsschicht 4. Das Folienteil 10 wird dann in einem Schritt des Verbindens mit der Basisschicht 2 und der Informationsschicht 4 verbunden, insbesondere verschmolzen oder verklebt. Besonders bevorzugt ist das Verbinden durch das Laminieren von Folienteil, Basisschicht 2 und Informationsschicht 4 miteinander verlaminiert.

Das mindestens eine Folienteil 10 wird während der Schritt der Modifikation gegenüber der Basisschicht 2 auf der Informationsschicht 4 angeordnet, wobei das Folienteil 10 vor dem Verbinden, insbesondere dem Laminieren, in flächigem Kontakt mit der Informationsschicht 4 steht.

Bei der Verbindung durch Laminieren wird das Folienteil 10 in die Informationsschicht 4 eingebracht. Die Oberseite 19 des Folienteils 10 liegt dann plan mit der Oberseite 13 der Informationsschicht, so dass die Informationsschicht 4 bzw. der Datenträger eine durchgehende ebene Oberseite 13 aufweist. Das Folienteil 10 wird also in die Informationsschicht 4 eingebettet. Dies wird in den Figuren 2 und 3 gezeigt.

Das Folienteil 10 weist dabei ein Dicke auf, welche kleiner ist als die Dicke der Informationsschicht 4, so dass zwischen der Basisschicht 2 und dem Folienteil 10 sich immer noch einen Teil, also die Schicht 22, der Informationsschicht 4 erstreckt. Dieser Teil der Informationsschicht 4 ist dann aber nur noch für die Bearbeitungsmittel empfänglich, welche nicht durch das Folienteil 10, welches die Absorptionsschicht 21 bereitstellt, absorbiert werden.

Nach einer zweiten Ausführungsform, welche in der Figur 5 gezeigt wird, umfasst der Schritt der Modifikation ein Einlegen eines Licht der ersten Wellenlänge λ₁ absorbierenden Folienteils 10 in eine Kavität 16 in der Informationsschicht 4, welcher Folienteil 10 dann in einem Schritt des Verbindens mit der Basisschicht 2 und der Informationsschicht 4 verbunden, insbesondere verschmolzen oder verklebt wird. Besonders bevorzugt werden Folienteil, Basisschicht 2 und Informationsschicht 4 miteinander verlaminiert.

Die Kavität kann beispielsweise, wie in der Figur 5 gezeigt, durch eine Ausnehmung in einer ersten Folienschicht 14 der Informationsschicht 4, welche dann auf einer zweiten Folienschicht 15 aufliegt, gebildet werden. Diese beiden Folienschichten 14, 15 werden dann miteinander zur Informationsschicht 4 verbunden, insbesondere verlaminiert. Durch die Folienschicht 14 wird dann die oben beschriebene weitere Schicht 22 bereitgestellt.

Die zweite Folienschicht 15 erstreckt sich dabei über die gesamte Basisschicht und stellt im verbundenen Zustand die Informationsschicht 4 unterhalb des Folienteils 6 dar. Der Teil der Informationsschicht 4 unterhalb des Folienteils 10 ist dann aber nur noch für die Bearbeitungsmittel empfänglich, welche nicht durch das Folienteil 10 absorbiert werden.

In einer alternativen nicht gezeigten Ausführungsform kommt die Folienschicht 14 direkt auf die Oberseite 3 der Basisschicht 2 zu liegen, wobei das Einlegeteil dann auch in Kontakt mit der Oberseite 3 kommt. Diese Ausführungsform eignet sich insbesondere für die Bearbeitung mit dem ersten Laser.

Die Informationsschicht 4 bei allen hierin beschriebenen Ausführungsformen kann aus einer oder zwei oder mehreren Lagen bereitgestellt werden, welche dann miteinander verbunden werden.

Nach weiteren Ausführungsformen umfasst der Schritt der Modifikation eine Applikation eines Licht der ersten Wellenlänge λ₁ absorbierenden Materials im gelösten Zustand über ein Druckverfahren oder dergleichen, oder eine Applikation einer Licht der ersten Wellenlänge λ₁ absorbierenden Farbe.

In einer besonders bevorzugten Ausführungsform wird in der Informationsschicht 4, vorzugsweise unterhalb des modifizierten Teilbereichs 6, ein Licht der ersten Wellenlänge λ₁ fluoreszierender Bereich 17 angeordnet. Der fluoreszierende Bereich 17 kann an einer beliebigen Stelle angeordnet werden. Besonders bevorzugt ist der fluoreszierende Bereich 17 ein Teil des Sicherheitsdruckes 11 oder liegt im Wesentlichen direkt unter der modifizierten Schicht 21 bzw. ist an dieser angrenzend. Im Schritt der Bearbeitung des modifizierten Teilbereiches 6 wird dieser bereichsweise mit dem Bearbeitungsmittel 8 derart abgetragen, dass im besagten Folienbereich unter Beleuchtung mit Licht der ersten Wellenlänge λ₁ die abgetragenen Bereiche sichtbar werden. Die durch das erste Bearbeitungsmittel 8 hergestellte Gravur weist also eine Tiefe auf, welche die absorbierende Schicht mindestens teilweise entfernt oder ganz entfernt, so dass dieser unter Beleuchtung mit Licht der ersten Wellenlänge λ₁ sichtbar wird. Hierdurch kann ein weiteres Sicherheitsmerkmal geschaffen werden.

Besonders bevorzugt ist in oder auf der Informationsschicht 4 mindestens ein Sicherheitsdruck 11 vorhanden, welcher vorzugsweise die Gestalt von Guillochen aufweist. Wenn der der Sicherheitsdruck 11 innerhalb der Informationsschicht 4 zu liegen kommt, wird dieser vor der Laminierung von einzelnen Schichten zur Informationsschicht 4 auf die entsprechende Schicht aufgedruckt.

Der modifizierte Teilbereich 6 erstreckt sich in vordefinierten Bereichen über die Informationsschicht 4. Die Form des modfizierten Teilbereichs 6 kann dabei beliebig sein.

In einer alternativen Ausführungsform erstreckt sich der modifizierte Teilbereich 6 in zufällig angeordneten Bereichen über die Informationsschicht 4.

Bezüglich der Dicke der einzelnen Schichten ist anzumerken, dass die Informationsschicht 4 vorzugsweise ca. 200 µm und die Basisschicht 2 ca. 250 µm dick ist.

Bezüglich der in den Figuren 2 bis 5 gezeigten Querschnitte ist noch anzumerken, dass der Datenträger auf der Unterseite 20 der Basisschicht noch mit weiteren Schichten ergänzt werden kann. Beispielsweise mit einem Schichtaufbau wie von der Oberseite 18 her gesehen.

### BEZUGSZEICHENLISTE

- 1: Datenträger
- 2: Basisschicht
- 3: Oberseite
- 4: Informationsschicht
- 5a, 5b, 5c, 5d: personalisierte Informationen
- 6: modifizierten Teilbereich
- 7: unmodifizierten Teilbereich
- 8: erstes Bearbeitungsmittel; UV-Laser
- 9: zweites Bearbeitungsmittel; IR-Laser
- 10: Folienteil
- 11: Sicherheitsdruck
- 12: Gravur
- 13: Oberseite
- 14: erste Folienschicht
- 15: zweite Folienschicht
- 16: Kavität
- 17: fluoreszierender Bereich
- 18: Unterseite
- 19: Oberseite
- 20: Unterseite
- 21: modifizierte Schicht, Absorptionsschicht
- 22: Schicht

## Patentansprüche

1. Verfahren zur Herstellung eines mehrschichtigen Datenträgers (1) umfassend
mindestens eine Basisschicht (2) mit einer Oberseite (3), und
mindestens eine auf der besagten Oberseite (3) angeordnete transparente oder transluzente Informationsschicht (4) mit personalisierten Informationen (5a, 5b, 5c), wobei sich die Informationsschicht (4) vorzugsweise vollständig über die Basisschicht (2) erstreckt,
**dadurch gekennzeichnet,**
**dass** die Informationsschicht (4) mindestens einen modifizierten Teilbereich (6) und mindestens einen unmodifizierten Teilbereich (7) aufweist, wobei die Informationsschicht (4) im unmodifizierten Teilbereich (7) bezüglich ihrer Bearbeitungseigenschaften unterschiedlich zum modifizierten Teilbereich (6) ist, und
**dass** in einem Schritt der Personalisierung mit mindestens einem Bearbeitungsmittel (8, 9) die Informationsschicht (4) mit personalisierten Informationen (5a, 5b, 5c) versehen wird,
wobei der modifizierte Teilbereich (6) der Informationsschicht (4) unterschiedlich auf die Bearbeitung durch das mindestens eine Bearbeitungsmittel (8, 9) reagiert als der unmodifizierte Teilbereich (7), wodurch die Information (5a) im modifizierten Teilbereich (6) unterschiedlich von der Information (5b) im unmodifizierten Teilbereich repräsentiert wird,
wobei das Bearbeitungsmittel ein Laser (8) mit einer Wellenlänge (λ₁) ist, wobei der modifizierte Teilbereich (6) bezüglich Licht der Wellenlänge (λ₁) absorbierend ist, und dass der unmodifizierte Teilbereich (7) bezüglich Licht der Wellenlänge (λ₁) durchlässig ist, und
wobei der besagte Laser (8) beim Schritt der Personalisierung im Bereich der Oberseite (3) der Basisschicht (2) die Informationsschicht (4) aufgrund einer Energieabsorption an der Oberseite (3) der opaken Basisschicht (2) farblich verändert, insbesondere schwärzt, wobei mit der farblichen Veränderung bzw. der Schwärzung die personalisierte Information (5) dargestellt wird, und/oder
wobei die Informationsschicht (4) ein laseraktivierbares Additiv umfasst, welches beim Schritt der Personalisierung durch einen zweiten Laser (9) farblich veränderbar ist, wobei das Additiv vorzugsweise im modifizierten Teilbereich (6) und im unmodifizierten Teilbereich (7) vorhanden ist.

2. Verfahren nach Anspruch 1, **dadurch gekennzeichnet, dass** der besagte Laser (8) ein erster Laser (8) mit einer ersten Wellenlänge (λ₁) ist, und dass das Bearbeitungsmittel zusätzlich zum ersten Laser den zweiten Laser mit einer zweiten Wellenlänge (λ₂) umfasst, dass der modifizierte Teilbereich (6) bezüglich Licht der ersten Wellenlänge (λ₁) absorbierend ist, und dass der unmodifizierte Teilbereich (7) bezüglich Licht der ersten Wellenlänge (λ₁) und/oder der zweiten Wellenlänge (λ₂) durchlässig ist.

3. Verfahren nach Anspruch 1 oder 2, **dadurch gekennzeichnet, dass**
durch den ersten Laser (8) beim Schritt der Personalisierung im modifizierten Teilbereich (6) aufgrund dessen absorbierender Eigenschaft die personalisierte Information (5) auf der Oberseite (3) durch einen Materialabtrag eingraviert (12) wird.

4. Verfahren nach einem der Ansprüche 1 bis 3, **dadurch gekennzeichnet, dass** die Informationsschicht (4) im modifizierten Teilbereich (6) eine modifizierte Schicht (21) umfasst, die in oder auf der Informationsschicht (4) beabstandet zur Basisschicht (2) liegt, so dass zwischen der modifizierten Schicht (21) und der Basisschicht (2) sich eine weitere Schicht (22) erstreckt, wobei die modifizierte Schicht (21) eine Absorptionsschicht (21) ist, welche für Licht des ersten Lasers (8) absorbierend ist und welche für Licht des zweiten Lasers (9) durchlässig ist, so dass mit dem zweiten Laser (9) die zwischen der modifizierten Schicht (21) und der Basisschicht liegende weitere Schicht (22) personalisiert werden kann, oder dass die Informationsschicht (4) im modifizierten Teilbereich (6) eine modifizierte Schicht (21) umfasst, welche auf der Basisschicht (2) aufliegt und sich von der Basisschicht (2) vollständig durch die Informationsschicht hindurch erstreckt.

5. Verfahren nach einem der vorhergehenden Ansprüche, dadurch dass die erste Wellenlänge (λ₁) eine Wellenlänge im ultravioletten Bereich ist, insbesondere bei 254 nm oder 355 nm, ist, und dass die zweite Wellenlänge (λ₂) im infraroten Bereich ist, insbesondere bei 1064 nm oder 10,60 µm, ist.

6. Verfahren nach einem der vorhergehenden Ansprüche, **dadurch gekennzeichnet, dass** der modifizierte Teilbereich (6) in einem Schritt der Modifikation bereitgestellt wird,
welcher Schritt ein Auflegen mindestens eines Licht der ersten Wellenlänge (λ₁) absorbierenden Folienteils (10) auf die Informationsschicht (4) umfasst, welcher Folienteil (10) dann in einem Schritt des Verbindens mit der Basisschicht (2) und der Informationsschicht (4) verbunden, insbesondere verschmolzen oder verklebt, wird, oder
welcher Schritt ein Einlegen eines Licht der ersten Wellenlänge (λ₁) absorbierenden Folienteils (10) in eine Kavität (16) in der Informationsschicht (4) umfasst, welcher Folienteil dann in einem Schritt des Verbindens mit der Basisschicht (2) und der Informationsschicht (4) verbunden, insbesondere verschmolzen oder verklebt, wird, oder
welcher Schritt eine Applikation eines Licht der ersten Wellenlänge (λ₁) absorbierenden Materials im gelösten Zustand über ein Druckverfahren oder dergleichen umfasst, oder
welcher Schritt eine Applikation einer Licht der ersten Wellenlänge (λ₁) absorbierenden Farbe umfasst.

7. Verfahren nach Anspruch 6, **dadurch gekennzeichnet,**
**dass** das mindestens eine Folienteil (10) gegenüber der Basisschicht (2) auf der Informationsschicht (4) angeordnet ist, wobei das Folienteil (10) vor dem Laminieren in flächigem Kontakt mit der Informationsschicht (4) steht, oder
**dass** die Informationsschicht (4) mindestens zwei übereinander liegenden Schichten (14, 15) umfasst, wovon eine erste Schicht (15) auf der Oberseite (3) der Basisschicht (2) aufliegt und eine zweite Schicht (15) auf der ersten Schicht (14) aufliegt, wobei in der zweiten Schicht (15) die besagte Kavität (16) zur Aufnahme des Folienteils (10) vorhanden ist.

8. Verfahren nach einem der vorhergehenden Ansprüche, **dadurch gekennzeichnet, dass** in der Informationsschicht (4), vorzugsweise unterhalb des modifizierten Teilbereichs (6), mindestens ein Licht der ersten Wellenlänge (λ₁) fluoreszierender Bereich (17) angeordnet wird, wobei im Schritt der Bearbeitung des modifizierten Teilbereiches (6) dieser bereichsweise mit dem Laser (8, 9) derart abgetragen wird, dass im besagten Folienbereich unter Beleuchtung mit Licht der ersten Wellenlänge (λ₁) die abgetragenen Bereiche sichtbar werden.

9. Verfahren zur Herstellung eines mehrschichtigen Datenträgers (1) umfassend
mindestens eine Basisschicht (2) mit einer Oberseite (3), und
mindestens eine auf der besagten Oberseite (3) angeordnete transparente oder transluzente Informationsschicht (4) mit personalisierten Informationen (5a, 5b, 5c), wobei sich die Informationsschicht (4) vorzugsweise vollständig über die Basisschicht (2) erstreckt,
**dadurch gekennzeichnet,**
**dass** die Informationsschicht (4) mindestens einen modifizierten Teilbereich (6) und mindestens einen unmodifizierten Teilbereich (7) aufweist, wobei die Informationsschicht (4) im unmodifizierten Teilbereich (7) bezüglich ihrer Bearbeitungseigenschaften unterschiedlich zum modifizierten Teilbereich (6) ist, und
**dass** in einem Schritt der Personalisierung mit mindestens einem Bearbeitungsmittel (8, 9) die Informationsschicht (4) mit personalisierten Informationen (5a, 5b, 5c) versehen wird,
wobei der modifizierte Teilbereich (6) der Informationsschicht (4) unterschiedlich auf die Bearbeitung durch das mindestens eine Bearbeitungsmittel (8, 9) reagiert als der unmodifizierte Teilbereich (7), wodurch die Information (5a) im modifizierten Teilbereich (6) unterschiedlich von der Information (5b) im unmodifizierten Teilbereich repräsentiert wird, und
wobei das Bearbeitungsmittel ein Drucker ist, insbesondere ein Transfer-, Retransfer-, Thermosublimations-, Inkjetdrucker oder dergleichen, ist, dass das Farbsubstrat in den modifizierten Teilbereich eindringt, an dessen Oberfläche absorbiert wird oder mit dessen Oberfläche in adhäsiver Wechselwirkung tritt, und dass das Farbsubstrat mit dem unmodifizierten Teilbereich nicht in Wechselwirkung tritt.

10. Verfahren nach einem der vorhergehenden Ansprüche, **dadurch gekennzeichnet, dass** in der Informationsschicht (4) mindestens ein Sicherheitsdruck (11) vorhanden ist, welcher vorzugsweise die Gestalt von Guillochen aufweist.

11. Verfahren nach einem der vorhergehenden Ansprüche, **dadurch gekennzeichnet, dass** der modifizierte Teilbereich (7) sich in vordefinierten Bereichen über die Informationsschicht (4) erstreckt, oder dass der modifizierte Teilbereich (7) sich in zufällig angeordneten Bereichen über die Informationsschicht (4) erstreckt.

12. Verfahren nach einem der vorhergehenden Ansprüche, **dadurch gekennzeichnet, dass** die Basisschicht (2), die Informationsschicht (4) und das mindestens eine Folienteil (7), ggf. die Deckschicht (10) aus einem thermoplastisch verarbeitbaren Kunststoff bestehen und in einem Schritt des Verbindens, insbesondere des Laminierens unter Druck- und Temperatureinwirkung, miteinander verbunden werden.

13. Datenträger hergestellt nach einem der Ansprüche 1 bis 12, umfassend
mindestens eine Basisschicht (2) mit einer Oberseite (3), und
mindestens eine auf der besagten Oberseite (3) angeordnete transparente oder transluzente Informationsschicht (4) mit personalisierten Informationen (5), wobei sich die Informationsschicht (4) vorzugsweise vollständig über die Basisschicht (2) erstreckt, **dadurch gekennzeichnet,**
**dass** die Informationsschicht (4) mindestens einen modifizierten Teilbereich (6) und mindestens einen unmodifizierten Teilbereich (7) aufweist, wobei die Informationsschicht (4) im unmodifizierten Teilbereich (7) bezüglich ihrer Bearbeitungseigenschaften unterschiedlich zum modifizierten Teilbereich ist (6), und
**dass** in einem Schritt der Personalisierung mit mindestens einem Bearbeitungsmittel (8, 9) die Informationsschicht (4) mit personalisierten Informationen (5) versehbar ist, wobei der modifizierte Teilbereich (6) der Informationsschicht (4) unterschiedlich auf die Bearbeitung durch das Bearbeitungsmittel reagiert als der unmodifizierte Teilbereich (7), wodurch die Information (5) im modifizierten Teilbereich (6) unterschiedlich von der Information (5) im unmodifizierten Teilbereich repräsentiert wird.

14. Datenträger nach Anspruch 13, **dadurch gekennzeichnet, dass** die Informationsschicht (4) im modifizierten Teilbereich (6) eine modifizierte Schicht (21) umfasst, die in oder auf der Informationsschicht (4) beabstandet zur Basisschicht (2) liegt, so dass zwischen der modifizierten Schicht (21) und der Basisschicht (2) sich eine weitere Schicht (22) erstreckt, wobei die modifizierte Schicht (21) eine Absorptionsschicht (21) ist, welche für Licht des ersten Bearbeitungsmittels (8) absorbierend ist und welche für Licht des zweiten Bearbeitungsmittels (9) durchlässig ist, so dass mit dem zweiten Bearbeitungsmittel die zwischen der modifizierten Schicht (21) und der Basisschicht liegende weitere Schicht (22) personalisiert werden kann.

15. Datenträger nach Anspruch 13 oder 14, **dadurch gekennzeichnet, dass** er eine Ausweiskarte, eine Seite eines Passes, eine Kreditkarte, ein Wertpapier, ein Sicherheitsdokument oder dergleichen ist.

## Claims

1. Method of manufacturing a multilayer data carrier (1) comprising
at least one base layer (2) with a top side (3), and
at least one transparent or translucent information layer (4) with personalized information (5a, 5b, 5c) arranged on said top side (3), the information layer (4) preferably extending completely over the base layer (2),
**characterized in that**
the information layer (4) has at least one modified portion (6) and at least one unmodified portion (7), the information layer (4) in the unmodified portion (7) being different from the modified portion (6) in terms of its processing properties, and
**in that** in a step of personalization with at least one processing means (8, 9) the information layer (4) is provided with personalized information (5a, 5b, 5c),
wherein the modified portion (6) of the information layer (4) responds differently to processing by the at least one processing means (8, 9) than the unmodified portion (7), whereby the information (5a) in the modified portion (6) is represented differently from the information (5b) in the unmodified portion,
wherein the processing means is a laser (8) having a wavelength (λ₁), wherein the modified portion (6) is absorbent with respect to light of the wavelength (λ₁), and **in that** the unmodified portion (7) is transmissive with respect to light of the wavelength (λ₁), and
wherein said laser (8), during the step of personalization in the region of the top side (3) of the base layer (2), changes the color of the information layer (4) due to an energy absorption at the top side (3) of the opaque base layer (2), in particular blackens it, wherein the personalized information (5) is displayed with the color change or the blackening, and/or
wherein the information layer (4) comprises a laser-activatable additive which is color-changeable by a second laser (9) during the step of personalization, the additive preferably being present in the modified portion (6) and in the unmodified portion (7).

2. The method of claim 1, **characterized in that** said laser (8) is
a first laser (8) having a first wavelength (λ₁), and **in that** the processing means comprises, in addition to the first laser, the second laser having a second wavelength (λ₂), **in that** the modified portion (6) is absorbent with respect to light of the first wavelength (λ₁), and **in that** the unmodified portion (7) is transmissive with respect to light of the first wavelength (λ₁) and/or the second wavelength (λ₂).

3. The method of claim 1 or 2, **characterized in that**
the personalized information (5) is engraved on the top side (3) through a material ablation (12) by the first laser (8) during the step of personalization in the modified portion (6) due to its absorbing property.

4. The method of any one of claims 1 to 3, **characterized in that** the information layer (4) in the modified portion (6) comprises a modified layer (21) which lies in or on the information layer (4) at a distance from the base layer (2), so that a further layer (22) extends between the modified layer (21) and the base layer (2), the modified layer (21) being an absorption layer (21) which is absorbent for light of the first laser (8) and which is transmissive for light of the second laser (9), so that with the second laser (9) the further layer (22) lying between the modified layer (21) and the base layer can be personalized, or that the information layer (4) in the modified portion (6) comprises a modified layer (21) which lies on the base layer (2) and extends from the base layer (2) completely through the information layer.

5. The method of any one of the preceding claims, **characterized in that** the first wavelength (λ₁) is a wavelength in the ultraviolet range, in particular at 254 nm or 355 nm, and **in that** the second wavelength (λ₂) is in the infrared range, in particular at 1064 nm or 10,60 µm.

6. The method of any one of the preceding claims, **characterized in that** the modified portion (6) is provided in a step of modification,
which step comprises placing at least one foil part (10) absorbing light of the first wavelength (λ₁) on the information layer (4), which foil part (10) is then bonded, in particular fused or glued, to the base layer (2) and the information layer (4) in a bonding step, or
which step comprises inserting a foil part (10) absorbing light of the first wavelength (λ₁) into a cavity (16) in the information layer (4), which foil part is then bonded, in particular fused or glued, to the base layer (2) and the information layer (4) in a bonding step, or
which step comprises, via a printing process or the like, an application of a material in the dissolved state absorbing light of the first wavelength (λ₁), or
which step comprises an application of a color absorbing light of the first wavelength (λ₁).

7. The method of claim 6, **characterized in that**
the at least one foil part (10) is arranged opposite the base layer (2) on the information layer (4), the film part (10) being in areal contact with the information layer (4) before lamination, or
**in that** the information layer (4) comprises at least two superimposed layers (14, 15), of which a first layer (15) lies on the top side (3) of the base layer (2) and a second layer (15) lies on the first layer (14), the said cavity (16) for receiving the foil part (10) being present in the second layer (15).

8. The method of any one of the preceding claims, **characterized in that** at least one region (17) fluorescing light of the first wavelength (λ₁) is arranged in the information layer (4), preferably below the modified portion (6), wherein in the step of processing the modified portion (6), the latter is ablated in regions with the laser (8, 9) in such a way that the ablated regions become visible in the said foil region under illumination with light of the first wavelength (λ₁).

9. A method of manufacturing a multilayer data carrier (1) comprising
at least one base layer (2) with a top side (3), and
at least one transparent or translucent information layer (4) with personalized information (5a, 5b, 5c) arranged on said top side (3), the information layer (4) preferably extending completely over the base layer (2),
**characterized in that**
the information layer (4) has at least one modified portion (6) and at least one unmodified portion (7), the information layer (4) in the unmodified portion (7) being different from the modified portion (6) in terms of its processing properties, and
**in that** in a step of personalization with at least one processing means (8, 9) the information layer (4) is provided with personalized information (5a, 5b, 5c),
wherein the modified portion (6) of the information layer (4) responds differently to processing by the at least one processing means (8, 9) than the unmodified portion (7), whereby the information (5a) in the modified portion (6) is represented differently from the information (5b) in the unmodified portion, and
wherein the processing means is a printer, in particular a transfer printer, retransfer printer, dye-sublimation printer, inkjet printer or the like, **in that** the dye substrate penetrates the modified portion, is absorbed on the surface thereof or interacts adhesively with the surface thereof, and **in that** the dye substrate does not interact with the unmodified portion.

10. The method of any one of the preceding claims, **characterized in that** at least one security print (11) is present in the information layer (4), which preferably has the shape of guilloches.

11. The method of any one of the preceding claims, **characterized in that** the modified portion (7) extends over the information layer (4) in predefined regions, or **in that** the modified portion (7) extends over the information layer (4) in randomly arranged regions.

12. The method of any one of the preceding claims, **characterized in that** the base layer (2), the information layer (4) and the at least one foil part (7), optionally the cover layer (10), consist of a thermoplastically processable plastic and are bonded to one another in a bonding step, in particular laminating under the action of pressure and temperature.

13. A data carrier manufactured according to any one of claims 1 to 12, comprising
at least one base layer (2) with a top side (3), and
at least one transparent or translucent information layer (4) with personalized information (5) arranged on said upper surface (3), the information layer (4) preferably extending completely over the base layer (2),
**characterized in that**
**in that** the information layer (4) has at least one modified portion (6) and at least one unmodified portion (7), the information layer (4) in the unmodified portion (7) being different from the modified portion (6) in terms of its processing properties, and
**in that**, in a step of personalization with at least one processing means (8, 9), the information layer (4) can be provided with personalized information (5), the modified portion (6) of the information layer (4) reacting differently to the processing by the processing means than the unmodified portion (7), as a result of which the information (5) in the modified portion (6) is represented differently from the information (5) in the unmodified portion.

14. The data carrier of claim 13, **characterized in that** the information layer (4) in the modified portion (6) comprises a modified layer (21) which lies in or on the information layer (4) at a distance from the base layer (2), so that a further layer (22) extends between the modified layer (21) and the base layer (2), wherein the modified layer (21) is an absorption layer (21) which is absorbent for light of the first processing means (8) and which is transmissive for light of the second processing means (9), so that with the second processing means the further layer (22) lying between the modified layer (21) and the base layer can be personalized.

15. The data carrier according to claim 13 or 14, **characterized in that** it is an identification card, a page of a passport, a credit card, a security document or the like.

## Revendications

1. Procédé de fabrication d'un support de données multicouche (1) comprenant
au moins une couche de base (2) avec une face supérieure (3), et
au moins une couche d'informations transparente ou translucide (4) avec des informations personnalisées (5a, 5b, 5c) disposées sur ladite face supérieure (3), la couche d'informations (4) s'étendant de préférence complètement sur la couche de base (2),
**caractérisé en ce que**,
la couche d'informations (4) présente au moins une sous-zone modifiée (6) et au moins une sous-zone non modifiée (7), la couche d'informations (4) dans la sous-zone non modifiée (7) étant différente de la sous-zone modifiée (6) en ce qui concerne ses propriétés de traitement, et
dans une étape de personnalisation avec au moins un moyen de traitement (8, 9) la couche d'informations (4) est munie d'informations personnalisées (5a, 5b, 5c),
dans lequel la sous-zone modifiée (6) de la couche d'informations (4) réagit différemment au traitement par l'au moins un moyen de traitement (8, 9) que la sous-zone non modifiée (7), moyennant quoi les informations (5a) dans la sous-zone modifiée (6) sont représentées différemment de l'information (5b) dans la sous-zone non modifiée,
dans lequel le moyen de traitement est un laser (8) de longueur d'onde (λ₁), la sous-zone modifiée (6) étant absorbante par rapport à une lumière de longueur d'onde (λ₁), et que la sous-zone non modifiée (7) étant perméable par rapport à une lumière de longueur d'onde (λ₁), et
dans lequel ledit premier laser (8), dans l'étape de personnalisation dans la face supérieure (3) de la couche de base (2) change la couleur de, et en particulier noircit, la couche d'informations (4) en raison d'une absorption d'énergie sur la face supérieure (3) de la couche de base opaque (2), les informations personnalisées (5) étant affichées par le biais du changement de couleur ou le noircissement, et / ou
dans lequel la couche d'informations (4) comprend un additif pouvant être activé par laser qui peut être changé de couleur lors de l'étape de personnalisation par un deuxième laser (9), l'additif étant de préférence présent dans la sous-zone modifiée (6) et dans la sous-zone non modifiée (7).

2. Procédé selon la revendication 1, **caractérisé en ce que** ledit laser (8) est un premier laser (8) de première longueur d'onde (λ₁), et que les moyens de traitement comprennent, en plus du premier laser, un deuxième laser de deuxième longueur d'onde (λ₂), la sous-zone modifiée (6) étant absorbante par rapport à une lumière de première longueur d'onde (λ₁), et **en ce que** la sous-zone non modifiée (7) est transparente par rapport à une lumière de première longueur d'onde (λ₁) et / ou de deuxième longueur d'onde (λ₂).

3. Procédé selon la revendication 1 ou 2, **caractérisé en ce que**
lors de l'étape de personnalisation dans la sous-zone modifiée (6), du fait de sa propriété absorbante, l'information personnalisée (5) est gravée (12) sur la face supérieure (3) par enlèvement de matière par le premier laser (8).

4. Procédé selon l'une des revendications 1 à 3, **caractérisé en ce que** la couche d'informations (4) dans la sous-zone modifiée (6) comprend une couche modifiée (21), qui se situe dans ou sur la couche d'informations (4) à distance de la couche de base (2), de telle sorte qu'une couche supplémentaire (22) s'étend entre la couche modifiée (21) et la couche de base (2), la couche modifiée (21) étant une couche d'absorption (21), qui absorbe la lumière du premier laser (8) et qui est perméable à la lumière du deuxième laser (9), de sorte que la couche supplémentaire (22) se trouvant entre la couche modifiée (21) et la couche de base peut être personnalisée avec le deuxième laser, ou que la couche d'informations (4) dans la sous-zone modifiée (6) comprend une couche modifiée (21) qui repose sur la couche de base (2) et s'étend complètement à travers la couche d'informations à partir de la couche de base (2).

5. Procédé selon l'une des revendications précédentes, **caractérisé en ce que** la première longueur d'onde (λ₁) est une longueur d'onde dans le domaine ultraviolet, notamment à 254 nm ou 355 nm, et que la deuxième longueur d'onde (λ₂) est dans le domaine infrarouge, en particulier à 1064 nm ou 10,60 µm.

6. Procédé selon l'une des revendications précédentes, **caractérisé en ce que** la sous-zone modifiée (6) est mise à disposition dans une étape de la modification,
laquelle étape comprend le placement d'au moins une partie de film (10) absorbant la lumière de première longueur d'onde (λ₁) sur la couche d'informations (4), laquelle partie de film (10) est alors reliée, en particulier fusionnée ou collée à la couche de base (2) et la couche d'informations (4) dans une étape de liaison, ou
laquelle étape comprend l'insertion d'une partie de film (10) absorbant la lumière de première longueur d'onde (λ₁)) dans une cavité (16) dans la couche d'informations (4), laquelle partie de film est alors reliée, en particulier fusionnée ou collée, à la couche de base (2) et la couche d'informations (4) dans une étape de liaison, ou
laquelle étape comprend une application d'un matériau absorbant la lumière de première longueur d'onde (λ₁) à l'état dissous au moyen d'un procédé d'impression ou analogue , ou
laquelle étape comprend une application d'une peinture absorbant la lumière de première longueur d'onde (λ₁).

7. Procédé selon la revendication 6, **caractérisé en ce que**
l'au moins une partie de film (10) est disposée en face de la couche de base (2) sur la couche d'informations (4), la partie de film (10) étant en contact plat avec la couche d'informations (4) avant le laminage, ou
la couche d'informations (4) comprend au moins deux couches superposées (14, 15), dont une première couche (15) repose sur la face supérieure (3) de la couche de base (2) et une deuxième couche (15) repose sur la première couche (14), ladite cavité (16) destinée à recevoir la partie de film (10) étant présente dans la deuxième couche (15).

8. Procédé selon l'une des revendications précédentes, **caractérisé en ce que** dans la couche d'informations (4), de préférence au-dessous de la sous-zone modifiée (6), est disposée au moins une zone fluorescente (17) de lumière de première longueur d'onde (λ₁), dans lequel dans l'étape de traitement de la sous-zone modifiée (6) celle-ci est ablatée dans des zones par le laser (8, 9) de manière à ce que dans lesdites parties de film les zones soumises à une ablation deviennent visibles sous un éclairage avec de la lumière de première longueur d'onde (λ₁).

9. Procédé de fabrication d'un support de données multicouche (1) comprenant
au moins une couche de base (2) avec une face supérieure (3), et
au moins une couche d'informations transparente ou translucide (4) avec des informations personnalisées (5a, 5b, 5c) disposées sur ladite face supérieure (3), la couche d'informations (4) s'étendant de préférence complètement sur la couche de base (2),
**caractérisé en ce que**,
la couche d'informations (4) présente au moins une sous-zone modifiée (6) et au moins une sous-zone non modifiée (7), la couche d'informations (4) dans la sous-zone non modifiée (7) étant différente de la sous-zone modifiée (6) en ce qui concerne ses propriétés de traitement, et
dans une étape de personnalisation avec au moins un moyen de traitement (8, 9) la couche d'informations (4) est munie d'informations personnalisées (5a, 5b, 5c),
dans lequel la sous-zone modifiée (6) de la couche d'informations (4) réagit différemment au traitement par l'au moins un moyen de traitement (8, 9) que la sous-zone non modifiée (7), moyennant quoi les informations (5a) dans la sous-zone modifiée (6) sont représentées différemment de l'information (5b) dans la sous-zone non modifiée,
dans lequel le moyen de traitement est une imprimante, en particulier une imprimante à transfert, re-transfert, sublimation thermique, à jet d'encre ou similaire, que le substrat de couleur pénètre dans la sous-zone modifiée, est absorbé sur la surface de celle-ci ou interagit avec la surface de celle-ci de manière adhésive, et **en ce que** le substrat de couleur n'interagit pas avec la sous-zone non modifiée.

10. Procédé selon l'une des revendications précédentes, **caractérisé en ce qu'**au moins une impression de sécurité (11) est présente dans la couche d'informations (4), qui a de préférence la forme de guilloches.

11. Procédé selon l'une des revendications précédentes, **caractérisé en ce que** la sous-zone modifiée (7) s'étend dans des zones prédéfinies sur la couche d'informations (4), ou que la sous-zone modifiée (7) s'étend dans des zones disposées de manière aléatoire sur les couche informations (4).

12. Procédé selon l'une des revendications précédentes, **caractérisé en ce que** la couche de base (2), la couche d'information (4) et l'au moins une partie de film (7), éventuellement la couche de couverture (10), sont constituées d'une matière plastique thermo-formable et dans une étape de liaison, en particulier de laminage sous l'action de pression et de température, sont reliés les unes aux autres.

13. Support de données réalisé selon l'une des revendications 1 à 12, comprenant
au moins une couche de base (2) avec une face supérieure (3), et
au moins une couche d'informations transparente ou translucide (4) avec des informations personnalisées (5) disposées sur ladite face supérieure (3), la couche d'informations (4) s'étendant de préférence complètement sur la couche de base (2),
**caractérisé en ce**
**que** la couche d'informations (4) présente au moins une sous-zone modifiée (6) et au moins une sous-zone non modifiée (7), la couche d'informations (4) dans la sous-zone non modifiée (7) étant différente de la sous-zone modifiée (6) en ce qui concerne ses propriétés de traitement, et
**que** dans une étape de personnalisation avec au moins un moyen de traitement (8, 9) la couche d'informations (4) peut être munie d'informations personnalisées (5), la sous-zone modifiée (6) de la couche d'informations (4) réagissant différemment au traitement par les moyens de traitement que la sous-zone non modifiée (7), moyennant quoi les informations (5) dans la sous-zone modifiée (6) sont représentées différemment aux informations (5) dans la sous-zone non modifiée.

14. Support de données selon la revendication 13, **caractérisé en ce que** la couche d'informations (4) dans la sous-zone modifiée (6) comprend une couche modifiée (21), qui se trouve dans ou sur la couche d'informations (4) à distance de la couche de base (2), de sorte qu'entre la couche modifiée (21) et la couche de base (2) une couche supplémentaire (22) s'étend, la couche modifiée (21) étant une couche d'absorption (21) qui est absorbante pour la lumière des premiers moyens de traitement (8) et qui est perméable à la lumière des deuxièmes moyens de traitement (9), de sorte que la couche supplémentaire (22) se situant entre la couche modifiée (21) et la couche de base peut être personnalisé avec les deuxièmes moyens de traitement.

15. Support de données selon la revendication 13 ou 14, **caractérisé en ce qu'**il s'agit d'une carte d'identité, d'une page de passeport, d'une carte de crédit, d'un document de valeur, d'un document de sécurité ou similaire.
